# EUROPÄISCHE PATENTANMELDUNG

(11) **EP 3 838 946 A1**
(43) Veröffentlichungstag der Anmeldung: **23.06.2021**
(21) Anmeldenummer: 19216794.8
(22) Anmeldetag: 17.12.2019
(51) Int. Cl.: C08G 18/10, C08G 18/32, C08G 18/73

(54) **VERFAHREN ZUR HERSTELLUNG EINES THERMOPLASTISCHEN POLYURETHANS MIT NIEDRIGER FARBZAHL**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein Verfahren zur Herstellung eines thermoplastischen Polyurethans mit niedriger Farbzahl sowie das damit erhaltene thermoplastische Polyurethan und seine Verwendung.

## Beschreibung

Die vorliegende Erfindung betrifft ein Verfahren zur Herstellung eines thermoplastischen Polyurethans mit niedriger Farbzahl sowie das damit erhaltene thermoplastische Polyurethan und seine Verwendung.

Thermoplastische Polyurethane sind weitgehend unverzweigte Makromoleküle. Sie werden üblicherweise erhalten, indem bifunktionelle Isocyanate, langkettige Diole, wie z.B. Polyether oder Polyester, und Kettenverlängerer miteinander zur Reaktion gebracht werden. Es gibt verschiedene technische Verfahren zur Herstellung von thermoplastischem Polyurethan (TPU), wobei zwischen diskontinuierlichen Batch-Verfahren und kontinuierlichen Verfahren unterschieden wird. Ein kontinuierliches Verfahren ist die Reaktiv-Extrusion, bei der die zur Herstellung dienenden Ausgangsstoffe in einen Extruder eingetragen werden. Die Reaktiv-Extrusion ist von der Verwendung eines Extruders zur reinen Verarbeitung von Kunststoffen zu unterscheiden. Bei der Reaktiv-Extrusion werden die Ausgangsstoffe durch die Drehbewegungen der Schnecke des Extruders vermischt und reagieren miteinander, sodass eine Polymerschmelze erhalten wird. Diese Polymerschmelze wird dann extrudiert und die erhaltenen Extrudat-Stränge, evtl. nach einer Abkühlung in einem Wasserbad, zu Granulat geschnitten oder direkt in eine bestimmte Form gebracht. Bei der Verarbeitung von TPU in einem Extruder wird ein Granulat aus bereits synthetisiertem TPU im Extruder aufgeschmolzen und die Schmelze extrudiert.

Sofern ein TPU erneut geschmolzen wird können beim Aufschmelzen Inhomogenitäten in der Polymerschmelze dadurch entstehen, dass ein Teil des Granulats schon geschmolzen ist, ein anderer Teil jedoch noch nicht geschmolzen ist. Inhomogene Polymerschmelzen werfen Probleme bei der Verarbeitung im Extruder auf, weil nicht geschmolzene, weitgehend feste oder gelartige Teile langsamer im Extruder bewegt werden als bereits geschmolzenes TPU, das eine weitgehend flüssige oder zähflüssige Polymerschmelze bildet. Die weitgehend festen Teile können sich zudem im Extruder ansammeln und sich schubweise wieder lösen und zu Verunreinigungen der Polymerschmelze führen.

Polyurethane, die aus kurzkettigen aliphatischen Diolen und aliphatischen Polyisocyanaten aufgebaut sind, weisen vergleichbare oder bessere Eigenschaften zu den Polyamid-Kunststoffen auf. Sie lassen sich bis jetzt aber nicht zufriedenstellend im industriellen Maßstab herstellen, da entscheidende verfahrenstechnische Probleme bislang nicht gelöst werden konnten. Aufgrund der hohen Dichte an reaktiven Gruppen, weist die Polyaddition von kurzkettigen aliphatischen Diolen mit aliphatischen Polyisocyanaten eine hohe Wärmetönung bzw. Reaktionsenthalpie auf, was bei unzureichender Wärmeabfuhr zur Beschädigung bis hin zur Rückbildung von Monomeren und zur Zerstörung (Veraschung) des Polyurethans führt.

Die CN 10 714 1437 bezieht sich auf TPU, das in 3D-Druckverfahren verwendet werden soll. Die Druckschrift offenbart eine Synthese durch Reaktivextrusion und lehrt, dass die Schmelzenthalpie eines TPU durch die Zugabe eines Kettenverlängerers beeinflusst werden kann, wobei der Kettenverlängerer ein Cyclodextrin-Derivat ist.

Die CN 10 500 1626 offenbart ebenfalls ein Verfahren für die Reaktiv-Extrusion von Polyurethan. Die Druckschrift offenbart, dass die Fließeigenschaften des TPU durch Zugabe einer Mischung aus Diphenylsilylglykol und Ethylenglykol beeinflusst werden können.

Die US 2017/145146 bezieht sich auf TPU aus Komponenten, die aus nachwachsenden, pflanzlichen Ressourcen stammen. Die Druckschrift offenbart die Synthese in einem Batch-Verfahren und lehrt, dass die Schmelztemperatur eines TPU unter anderem vom Isocyanat-Index und der Polymerisationszeit abhängt.

DE728981 und US2511544 offenbaren ein Batch-Verfahren zur Umsetzung von Diisocyanaten mit Diolen und / oder Diaminen zu Polyurethan bzw. Polyharnstoffen in einem lösungsmittelhaltigen oder lösungsmittelfreien Verfahren.

Nachteilig bei den oben beschriebenen Batch-Verfahren ist, dass sich diese nur schwer aus dem Technikums-Maßstab upscalen lassen. Vor allem ist bei Systemen, die eine hohe exotherme Wärmetönung der Reaktion mit einer Reaktionsenthalpie von ≤ -500 kJ/kg aufweisen, der adiabatische Temperaturanstieg problematisch und die Abfuhr von Wärme, aufgrund des im großen Maßstab deutlich kleineren Verhältnisses von zur Verfügung stehender Kühlfläche zu dem Volumen des Produktes, unzureichend. Ausgehend von Monomeren bei einer Temperatur ausreichend für ein unkatalysiertes Starten der Reaktion (> 50 °C), würde bei adiabatischer Fahrweise die Temperatur der Reaktionsprodukte auf deutlich über 300 °C ansteigen. Die Herstellung und Verarbeitung von Polyurethanen bei Temperaturen von > 200 °C führt aufgrund einer Vielzahl von thermischen Nebenreaktionen zu Qualitätseinbußen. Zu hohe Produkttemperaturen können prinzipiell durch eine Batch-Fahrweise verhindert werden, bei der mindestens eines der beiden Monomere, entsprechend der Kühlleistung des Reaktors, langsam dosiert wird. Eine Kühlung von hochviskosen Polymeren in Batch-Apparaten ist allerdings technisch durch die Oberfläche des Wärmeübertragers und die Strömungsgeschwindigkeit limitiert. Lange Verweilzeiten in Kombination mit hohen Temperaturen erhöhen die Zahl unerwünschter Nebenreaktionen und beeinflussen die Produkteigenschaften nachteilhaft. Hinzu kommt, dass durch den Viskositätsanstieg bei der Polymerisation verfahrenstechnische Probleme auftauchen, wie beispielsweise eine erschwerte bis unmögliche Förderung des Polymers aus dem Batch-Apparat.

Es ist Aufgabe der vorliegenden Erfindung, ein Verfahren für die Herstellung eines thermoplastischen Polyurethans mit geringer Farbzahl zur Verfügung zu stellen, das es ermöglicht Polyadditionsreaktion mit großer negativer Reaktionsenthalpie pro kg Reaktionsmasse im industriellen Maßstab durchzuführen.

Diese Aufgabe wurde gelöst durch ein Verfahren zur Herstellung eines thermoplastischen Polyurethans mittels Reaktivextrusion durch Umsetzung der Komponenten
A) einem oder mehreren aliphatischen Diolen, wobei die Gesamtmenge der Komponente A) ein durchschnittliches Molekulargewicht im Bereich von 62 g/mol bis 120 g/mol aufweist,
B) 1,4-Diisocyanatobutan (BDI), 1,5-Diisocyanatopentan (PDI), 1,6-Diisocyanatohexan (HDI) und/ oder Mischungen aus mindestens 2 hieraus,
C) gegebenenfalls einem oder mehreren Katalysatoren, und
D) gegebenenfalls weiterer Hilfs- oder Zusatzstoffe,
dadurch gekennzeichnet, dass es die folgenden Schritte umfasst:
a) Diskontinuierliche Herstellung von OH-funktionellen Prepolymeren aus einer Teilmenge der Komponente A) oder der Gesamtmenge der Komponente A), bevorzugt der Gesamtmenge der Komponente A) mit einer Teilmenge der Komponente B), wobei ein molares Verhältnis von Komponente A) zu Komponente B) von 1,0 : 0,75 bis 1,0 : 0,95 vorliegt,
b) gegebenenfalls Isolieren der OH-funktionellen Prepolymere aus Schritt a),
c) Umsetzen der OH-funktionellen Prepolymere mit einer weiteren Teilmenge der Komponente B) und gegebenenfalls einer weiteren Teilmenge der Komponente A), bevorzugt nur mit einer weiteren Teilmenge der Komponente B), in einem Extruder unter Erhalt des thermoplastischen Polyurethans als Extrudat,
   wobei die Schritte a) und / oder c) gegebenenfalls in Gegenwart der Gesamtmenge oder einer Teilmenge der Komponente C) und / oder der Gesamtmenge oder einer Teilmenge der Komponente D) durchgeführt werden,
   wobei die Summe aller Teilmengen der Komponente B) bzw. die Summe aller Teilmengen der Komponente C), bzw. die Summe aller Teilmengen der Komponente D) über alle Verfahrensschritte der Gesamtmenge der Komponente B), bzw. der Gesamtmenge der Komponente C), bzw. der Gesamtmenge der Komponente D) entspricht.

Es wurde überraschend gefunden, dass mit dem erfindungsgemäßen Reaktivextrusionsverfahren mit vorgeschalteter diskontinuierlicher Herstellung eines Prepolymers ein thermoplastisches Polyurethan erhalten wird, welches eine niedrige Farbzahl aufweist, d.h. dass es kaum zu Produktschädigungen kommt. Durch die Kombination von diskontinuierlicher Herstellung in einer Batch-Apparatur mit einer Reaktivextrusion lässt sich kontinuierlich thermoplastisches Polyurethan erzeugen, das durch einen Polyadditionsreaktion mit großer negativer Reaktionsenthalpie pro kg Reaktionsmasse erhältlich ist.

Im Rahmen der vorliegenden Erfindung wird unter einem "OH-funktionellen Prepolymer" ein Prepolymergemisch verstanden, in dem mindestens 90 Anzahl-% der Molekülenden eine Hydroxygruppe aufweisen und die verbleibenden 10 Anzahl-% Molekülenden weitere HydroxyGruppen, NCO-Gruppen und / oder nicht-reaktive Gruppen aufweisen. Unter einer "nicht-reaktiven Gruppe" wird im Rahmen der vorliegenden Erfindung eine Gruppe verstanden, die unter den erfindungsgemäßen Reaktionsbedingungen weder mit NCO-Gruppen, noch mit OH-Gruppen während der Umsetzung reagiert. Eine nicht-reaktive Gruppe kann beispielsweise aus einer reaktiven NCO-Gruppe oder OH-Gruppe durch Reaktion mit geeigneten Reaktionspartnern (Kettenabbrecher) in eine nicht-reaktive Gruppe umgewandelt werden. Als Kettenabbrecher eignen sich alle monofunktionellen Verbindungen, die unter den erfindungsgemäßen Reaktionsbedingungen entweder mit einer Isocyanatgruppe oder mit einer Hydroxygruppe reagieren, beispielsweise MonoAlkohole, wie Methanol, Mono-Amine, wie Diethylamin und Monoisocyanate, wie Butylisocyanat. Das OH-funktionelle Prepolymer kann beispielsweise an einem Molekülende eine Hydroxygruppe aufweisen und an dem oder den anderen Molekülenden beispielsweise eine Alkylgruppe. Wenn im Rahmen der vorliegenden Erfindung von einem OH-funktionellen Prepolymer gesprochen wird, ist hiermit auch immer ein Gemisch aus dem mindestens einen OH-funktionellen Prepolymer und einem nicht-reaktiv terminierten Prepolymer umfasst.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Polyolen enthält.

Bevorzugt bedeuten erfindungsgemäß die Ausdrücke "umfassend" oder "enthaltend", "im Wesentlichen bestehend aus" und besonders bevorzugt "bestehend aus".

In Schritt a) des erfindungsgemäßen Verfahrens werden die OH-funktionellen Prepolymere in einem diskontinuierlichen Verfahren hergestellt. Hierzu wird aus einer Teilmenge der Komponente A) mit einer Teilmenge der Komponente B) oder aus der Gesamtmenge der Komponente A) mit einer Teilmenge der Komponente B) die OH-funktionellen Prepolymere hergestellt, wobei ein molares Verhältnis von Komponente A) zu Komponente B) von 1,0 : 0,75 bis 1,0 : 0,95 vorliegt. Die Umsetzung erfolgt typischerweise unter Temperaturkontrolle in einem Reaktionsbehälter wie beispielsweise in einem doppelwandigen Rührkessel, einem Rührkessel mit einer internen Kühlvorrichtung oder einem Rührkessel mit einem externen Kühlkreislauf, beispielsweise bestehend aus einer Umlaufpumpe und einem Wärmeübertrager. Vorzugsweise erfolgt die Umsetzung lösungsmittelfrei. Die OH-funktionellen Prepolymere entstehen dabei durch die Reaktion der Monomere der Komponenten A) und B) sowohl miteinander als auch mit im Reaktionsbehälter bereits vorhandenen oligomeren Reaktionsprodukten dieser Monomere.

Unter einem "lösungsmittelfreien Verfahren" oder "lösungsmittelfrei" wird im Rahmen der vorliegenden Erfindung die Umsetzung der Komponenten A und B ohne zusätzliche Verdünnungsmittel, wie beispielsweise organische Lösungsmittel oder Wasser verstanden, d.h. die Komponenten A und B werden bevorzugt unverdünnt miteinander zur Reaktion gebracht. Die Komponenten C und / oder D können gegebenenfalls in geeigneten Verdünnungsmitteln vorliegen und als Lösung zu den Komponenten A und / oder B zugegeben werden. Dabei ist das Verfahren im Sinne der vorliegenden Erfindung noch als lösungsmittelfrei anzusehen, wenn der Gehalt des Lösungsmittels bis 1 Gew.-%, vorzugsweise bis 0,1 Gew.-%, noch bevorzugter bis 0,01 Gew.-% bezogen auf das Gesamtgewicht der Reaktionsmischung beträgt. Unter einem Lösungsmittel wird dabei eine Substanz verstanden, in der wenigstens eine der Komponenten A und B und gegebenenfalls C und / oder D gelöst, dispergiert, suspendiert oder emulgiert werden kann, welche aber nicht mit einer der Komponenten A und B und gegebenenfalls C und / oder D oder den OH-funktionellen Prepolymer(en) reagiert.

Weiterhin können die Komponenten A) und B) vor Eintritt in den Reaktionsbehälter miteinander vermischt werden, beispielsweise mittels eines Statikmischers. Bevorzugt wird dabei als Komponente A) 1,2-Ethandiol, 1,3-Propandiol, 1,4-Butandiol und / oder Mischungen aus mindestens 2 hieraus eingesetzt und noch bevorzugter 1,4-Butandiol eingesetzt. Als Komponente B) wird bevorzugt 1,5-Diisocyanatopentan (PDI), 1,6-Diisocyanatohexan (HDI) und / oder Mischungen hieraus eingesetzt und noch bevorzugter wird als Komponente B) 1,6-Diisocyanatohexan (HDI) eingesetzt. Vor dem Einbringen in den Reaktionsbehälter weist der Komponente B) bevorzugt eine Temperatur von 20 °C bis 25 °C und unabhängig hiervon die Komponente A) bevorzugt eine Temperatur von 35 °C bis 45 °C auf.

Vorzugsweise wird die Komponente A) in dem Reaktionsbehälter vorgelegt und die Komponente B) langsam hinzugegeben. Die Umsetzung kann in Gegenwart der Komponenten C) und / oder D) erfolgen. Die Gesamtmenge oder eine Teilmenge der Komponenten C) und / oder D) können dabei mit den Komponente A) und / oder B) vermischt sein. In einer bevorzugten Ausführungsform wird die Komponente C) mit der Komponente A) vermischt, bevor die Komponente B) in diese Mischung eingetragen wird. In einer anderen bevorzugten Ausführungsform werden die Komponenten A) und B) ohne die Komponenten C) und / oder D) miteinander zur Reaktion gebracht. Die Umsetzung der Komponenten A) und B) zu den OH-funktionellen Prepolymeren erfolgt vorzugsweise bei einer Temperatur von 40 °C bis 260 °C, besonders bevorzugt bei einer Temperatur von 70 °C bis 220 °C. Es ist dabei möglich, dass die Temperatur mit fortschreitender Umsetzung erhöht wird, d.h. am Anfang der Umsetzung liegt eine niedrigere Temperatur vor, beispielsweise eine Temperatur von 40 °C bis 70 °C, die dann mit fortschreitender Umsetzung erhöht wird, beispielsweise auf 180 °C bis 260 °C. Dies hat den Vorteil, dass die freiwerdende Reaktionswärme zur Erwärmung der Reaktionsmischung genutzt wird und die Temperatur besser kontrolliert werden kann. Für die Erhöhung der Temperatur kann der Behälter auch zusätzlich erwärmt werden.

In Schritt b) werden die in Schritt a) erzeugten OH-funktionellen Prepolymere gegebenenfalls isoliert. Da die OH-funktionellen Prepolymere bei Raumtemperatur (20 °C) aufgrund ihres festen Aggregatzustandes lagerstabil sind, können sie beispielsweise durch Überführung in einen geeigneten Lagertank oder durch Abfüllung in geeignete Gebinde isoliert werden und bei Bedarf wieder geschmolzen und dem Herstellprozess zugeführt werden.

In Schritt c) werden die OH-funktionellen Prepolymere mit einer weiteren Teilmenge der Komponente B) und gegebenenfalls einer weiteren Teilmenge der Komponente A), bevorzugt nur mit einer weiteren Teilmenge der Komponente B), in einem Extruder umgesetzt unter Erhalt des thermoplastischen Polyurethans als Extrudat. In dem Extruder werden die Komponenten durch die Bewegungen der Förderelemente im Inneren des Extruders sowohl durchmischt als auch in Extruderarbeitsrichtung stromabwärts in Richtung einer Auslassöffnung des Extruders befördert. Dabei reagieren die Komponenten miteinander in einem kontinuierlichen Prozess, so dass das thermoplastische Polyurethan erhalten wird. Bevorzugt nimmt die Viskosität der im Extruder befindlichen Komponenten in Extruderarbeitsrichtung mit fortschreitendem Polymerisationsgrad zu. Im Bereich der Einlassöffnungen für die OH-funktionellen Prepolymere und die Komponente B) und gegebenenfalls die Komponente A) liegt im Extruder bevorzugt eine Mischung mit einer niedrigen Viskosität vor, die als Flüssigkeit bezeichnet werden kann, während kurz vor Austritt aus dem Extruder vorzugsweise eine Polymerschmelze vorliegt, welche eine höhere Viskosität aufweist, als die OH-funktionellen Prepolymere und die Komponenten B) und gegebenenfalls A) und als zähflüssig bezeichnet werden kann. Bei dem Extruder handelt es sich bevorzugt um selbstreinigende Maschinen, besonders bevorzugt um einen gleichläufigen Doppelschneckenextruder oder einen Planetwalzenextruder. Derartige Extruder sind dem Fachmann bekannt und beispielsweise in K. Kohlgrüber (Herausgeber), Der gleichläufige Doppelschneckenextruder, ISBN 978-3-446-41252-1, Seite 1 beschrieben.

In einer bevorzugten Ausführungsform des erfindungsgemäßen Verfahrens wird die Umsetzung in Schritt c) bei einer Temperatur von 150 °C bis 260 °C, bevorzugt von 180 °C bis 240 °C durchgeführt. Dabei wird toleriert, dass das Produkt bei der Umsetzung kurzfristige (< 60 Sekunden) Abweichungen der Reaktionstemperatur von den oben genannten Bereichen erfährt.

In einer bevorzugten Ausführungsform des erfindungsgemäßen Verfahrens erfolgt die Umsetzung im Extruder in Schritt c) kontinuierlich oder diskontinuierlich, wobei vorzugsweise die Umsetzung im Extruder in Schritt c) kontinuierlich erfolgt.

In einer bevorzugten Ausführungsform des erfindungsgemäßen Verfahrens erfolgt die Einleitung der weiteren Teilmenge der Komponente B) und gegebenenfalls der weiteren Teilmenge der Komponente A) in den Extruder in Schritt c) in Extruderarbeitsrichtung stromabwärts der Einleitung der OH-funktionellen Prepolymere.

Bevorzugt werden die OH-funktionellen Prepolymere in Schritt c) einlassseitig des Extruders in den Extruder eingeleitet. Bevorzugt werden vor dem Einleiten der OH-funktionellen Prepolymere in den Extruder aus den OH-funktionellen Prepolymeren Gase und gasförmige Nebenprodukte entfernt. In einer bevorzugten Ausführungsform werden Gase und gasförmige Nebenprodukte entfernt, indem den OH-funktionellen Prepolymeren durch eine Entlüftungseinrichtung mit einem Unterdruck von 0,1 mbar bis 500 mbar unter Normaldruck geführt wird, wobei die Entlüftungseinrichtung vorzugsweise an dem Extruder angeordnet ist. Bevorzugt erfolgt die Entfernung von Gasen und gasförmigen Nebenprodukten durch eine atmosphärische Entgasung, d.h. durch eine Entlüftungseinrichtung, die an dem Extruder angeordnet ist, ohne Anlegung eines Unterdrucks. In einer weiteren bevorzugten Ausführungsform des erfindungsgemäßen Verfahrens werden vor dem Einleiten der OH-funktionellen Prepolymere in den Extruder in Schritt c) aus den OH-funktionellen Prepolymeren Gase und gasförmige Nebenprodukte entfernt, besonders bevorzugt indem die OH-funktionellen Prepolymere durch eine Entlüftungseinrichtung geführt werden, noch bevorzugter bei einem Unterdruck von 50 mbar bis 500 mbar unter Normaldruck, wobei die Entlüftungseinrichtung vorzugsweise an dem Extruder angeordnet ist.

In einer bevorzugten Ausführungsform des erfindungsgemäßen Verfahrens werden aus dem thermoplastischen Polyurethan Gase und gasförmige Nebenprodukte entfernt, indem ein Unterdruck von 50 mbar bis 500 mbar, bevorzugter von 80 mbar bis 300 mbar, noch bevorzugter von 100 mbar bis 250 mbar, jeweils unter Normaldruck, an einem Entgasungsschacht angelegt wird, der bevorzugt im in Extruderarbeitsrichtung letzten Drittel des Extruders angeordnet ist. Dazu wird bevorzugt ein Entgasungsdom auf dem Entgasungsschacht angeordnet.

In einer bevorzugten Ausführungsform des erfindungsgemäßen Verfahrens wird in dem Entgasungsschacht ein Entgasungsextruder angeordnet, auf dem sich ein Vakuumdom befindet und ein Unterdruck von 300 mbar bis 500 mbar unter Normaldruck angelegt wird. Bei dem Entgasungsextruder handelt es sich bevorzugt um einen kurzen Doppelschneckenextruder, bei dem die Laufrichtung der Schnecken bzw. Spindeln so eingestellt ist, dass sie Polymerschmelze oder thermoplastisches Polyurethan, welches durch den Unterdruck aus dem Extruder in den Entgasungsschacht gezogen wird, wieder in den Extruder befördert.

In einer weiteren Ausführungsform wird in dem Entgasungsschacht des Extruders eine Rückhalteeinrichtung angeordnet, auf der sich ein Vakuumdom befindet und ein Unterdruck von 250 mbar bis 350 mbar, bevorzugter von 280 mbar bis 320 mbar, jeweils unter Normaldruck angelegt. Bei dieser Ausführungsform wird ein Doppelschneckenextruder oder Planetwalzenextruder zur Durchführung des Verfahrens verwendet und die Öffnung des Entgasungsschachtes zum Extruder weist eine längliche Form auf und ist senkrecht zur Achse der Doppelschnecken bzw. zur Achse der Zentralspindel ausgebildet, so dass durch die Öffnung ein Teil beider Doppelschnecken bzw. der Planetspindeln überdeckt wird. Die Rückhalteeinrichtung ist bevorzugt so ausgestaltet, dass ihre zum Extruder orientierte Öffnung den Bereich der aufdrehenden Schnecke bzw. Spindel und des Zwickels überdeckt, so dass in diesem Bereich keine Polymerschmelze oder thermoplastisches Polyurethan, welches durch den Unterdruck aus dem Extruder in den Entgasungsschacht gezogen wird, eindringen kann. Über dem nicht überdeckten Bereich der Öffnung der Rückhalteeinrichtung führt bevorzugt ein Schacht schräg gegen die Drehrichtung der nicht überdeckten Schnecke bzw. Spindel weg in Richtung des Vakuumdoms. So prallt Polymerschmelze oder thermoplastisches Polyurethan, welches in die Rückhalteeinrichtung gezogen wird, an dem schrägen Schacht ab und fällt wieder zurück in den Extruder und wird durch die Drehbewegung der Schnecken bzw. Spindeln im Extruder wieder in den Extruder gezogen. Als Zwickel wird dabei der Eingreifbereich der beiden Schnecken bezeichnet. Bei Doppelschneckenextrudern berühren sich die beiden Schneckenelemente nicht, sind aber so ausgestaltet, dass sie ineinandergreifen. Der Eingreifbereich der beiden Schnecken wird Zwickel genannt. Als aufdrehende Schnecke wird die Schnecke bezeichnet, deren Rotationsbewegung von dem Gehäuse des Extruders weg zu dem Bereich zwischen den beiden Achsen der Schneckenelemente gerichtet ist.

Unter Normaldruck wird im Sinne der Erfindung ein Druck von 101 325 Pa = 1,013 25 bar verstanden.

Die Schritte a) und / oder c) können gegebenenfalls in Gegenwart der Gesamtmenge oder einer Teilmenge der Komponente C) und / oder der Gesamtmenge oder einer Teilmenge der Komponente D) durchgeführt werden. Die Summe aller Teilmengen der Komponente B) bzw. die Summe aller Teilmengen der Komponente C), bzw. die Summe aller Teilmengen der Komponente D) über alle Verfahrensschritte entspricht dabei der Gesamtmenge der Komponente B), bzw. der Gesamtmenge der Komponente C), bzw. der Gesamtmenge der Komponente D).

Bevorzugt umfasst das erfindungsgemäße Verfahren die folgenden, zusätzlichen Schritte:
f) Abkühlen des thermoplastischen Polyurethans auf eine Temperatur unter seinen Schmelzpunkt in einer Kühlungseinrichtung, wobei es sich bei der Kühlungseinrichtung bevorzugt um ein Wasserbad handelt,
g) Zerkleinerung des thermoplastischen Polyurethans in einer Zerkleinerungseinrichtung.

Dabei wird durch das Abkühlen des thermoplastischen Polyurethans ein Feststoff erhalten, der in der Zerkleinerungseinrichtung bevorzugt zu einem Granulat zerkleinert wird. Dieses Granulat kann in einem Extrusionsverfahren zur Weiterverarbeitung aufgeschmolzen und die durch das Aufschmelzen erhaltene Polymerschmelze zu einem Formteil verarbeitet werden, zum Beispiel durch Einspritzen in eine Form.

Als Komponente A) können im erfindungsgemäßen Verfahren eine oder mehrere aliphatische Diole eingesetzt werden. Als aliphatische Diole eigenen sich alle dem Fachmann bekannten aliphatischen Diole. Dies können beispielsweise sein 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol und 1,12-Dodecandiol. Die im Verfahren eingesetzte Gesamtmenge der Komponente A) muss allerdings ein durchschnittliches Molekulargewicht im Bereich von 62 g/mol bis 120 g/mol aufweisen. Die im erfindungsgemäßen Verfahren als Komponente A) eingesetzten aliphatischen Diole und / oder dessen Vorläuferverbindungen können aus fossilen oder biologischen Quellen gewonnen worden sein.

In einer bevorzugten Ausführungsform des erfindungsgemäßen Verfahrens ist die Komponente A) ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und / oder Mischungen aus mindestens 2 hieraus, vorzugsweise ausgewählt aus der Gruppe bestehend aus 1,2-Ethandiol, 1,2-Propandiol, 1,3-Propandiol, 1,2-Butandiol, 1,3-Butandiol, 1,4-Butandiol und / oder Mischungen aus mindestens 2 hieraus, besonders bevorzugt ausgewählt aus der Gruppe bestehend aus 1,2-Ethandiol, 1,3-Propandiol, 1,4-Butandiol, und / oder Mischungen aus mindestens 2 hieraus und noch bevorzugter wird als Komponente A) 1,4-Butandiol eingesetzt.

Als Komponente B) können im erfindungsgemäßen Verfahren 1,4-Diisocyanatobutan (BDI), 1,5-Diisocyanatopentan (PDI), 1,6-Diisocyanatohexan (HDI) und / oder Mischungen aus mindestens 2 hieraus eingesetzt werden. Vorzugsweise wird 1,5-Diisocyanatopentan (PDI), 1,6-Diisocyanatohexan (HDI) und / oder eine Mischung hieraus eingesetzt. Besonders bevorzugt wird 1,6-Diisocyanatohexan (HDI) als Komponente B) eingesetzt. Die im erfindungsgemäßen Verfahren als Komponente B) eingesetzten Diisocyanate und / oder deren Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei 1,6-Hexamethylendiamin und 1,5-Pentamethylendiamin aus biologischen Quellen, vorzugsweise durch bakterielle Fermentation, gewonnen werden.

In einer bevorzugten Ausführungsform des erfindungsgemäßen Verfahrens werden als Komponente A) 1,4-Butandiol und als Komponente B) 1,5-Diisocyanatopentan (PDI), 1,6-Diisocyanatohexan (HDI) und / oder Mischungen hieraus eingesetzt, vorzugsweise werden als Komponente A) 1,4-Butandiol und als Komponente B) 1,6-Diisocyanatohexan (HDI) eingesetzt.

Als Komponente C) können ein oder mehrere Katalysatoren eingesetzt werden. Geeignete erfindungsgemäße Katalysatoren sind die nach dem Stand der Technik bekannten und üblichen tertiären Amine, wie z. B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche, sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und / oder Zinnverbindungen.

Der Katalysator wird in Mengen von 0,001 Gew.-%bis 2,0 Gew.-%, bevorzugt von 0,005 Gew.-% bis 1,0 Gew.-% besonders bevorzugt von 0,01 Gew.-% bis 0,1 Gew.-% bezogen auf die Diisocyanatkomponente B eingesetzt. Der Katalysator kann in Substanz eingesetzt werden oder gelöst in der Diol-Komponente A. Ein Vorteil ist hierbei, dass die dann erhaltenen thermoplastischen Polyurethane keine Verunreinigungen durch gegebenenfalls mitverwendete Katalysatorlösungsmittel enthalten. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen.

Alternativ können aber auch Mischungen des bzw. der Katalysatoren mit einem Katalysatorlösungsmittel, bevorzugt mit einem organischen Katalysatorlösungsmittel, eingesetzt werden. Der Verdünnungsgrad der Katalysatorlösungen kann dabei innerhalb eines sehr breiten Bereichs frei gewählt werden. Katalytisch wirksam sind Lösungen ab einer Konzentration von 0,001 Gew.-%.

Geeignete Katalysatorlösungsmittel sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3-Methoxy-n-butylacetat, Propylenglykoldiacetat, Aceton, Methylethylketon, Methylisobutylketon, Cyclohexanon, Lactone, wie β -Propiolacton, γ-Butyrolacton, ε-Caprolacton und ε -Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Es können aber auch beim erfindungsgemäßen Verfahren Katalysatorlösungsmittel zum Einsatz kommen, die gegenüber Isocyanaten reaktive Gruppen tragen und in das Diisocyanat eingebaut werden können. Beispiele für solche Lösungsmittel sind ein- oder mehrwertige einfache Alkohole, wie z. B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonothylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z. B. Ethylenglykolmonoacetat, Propylen-glykolmonolaurat, Glycerinmono- und diacetat, Glycerinmonobutyrat oder 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

Als Komponente C) können im erfindungsgemäßen Verfahren auch Hilfs- und Zusatzstoffe eingesetzt werden. Dabei kann es sich beispielsweise um im Bereich der Thermoplasttechnologie gängige Zusatzstoffe wie Farbstoffe, Füllstoffe, Verarbeitungshilfsmittel, Weichmacher, Nucleierungsmittel, Stabilisatoren, Flammschutzmittel, Entformungsmittel oder verstärkende Additive handeln. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen. Selbstverständlich kann es ebenfalls von Vorteil sein, mehrere Zusatzstoffe mehrerer Typen zu verwenden.

In einer anderen bevorzugten Ausführungsform können als Zusatzstoffe in geringen Mengen auch übliche gegenüber Isocyanaten reaktive mono-, di-, tri- oder polyfunktionelle Verbindungen in Anteilen von 0,001 mol% bis zu 2 mol%, vorzugsweise von 0,002 mol% bis 1 mol%, bezogen auf die Gesamtstoffmenge der Komponente A, z. B. als Kettenabbrecher, Hilfsmittel oder Entformungshilfen, eingesetzt werden. Beispielhaft genannt seien Alkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol und Stearylalkohol. Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit. Ebenfalls geeignet sind Amine wie Butylamin und Stearylamin oder Thiole.

In einer bevorzugten Ausführungsform des erfindungsgemäßen Verfahrens ist die ausschließlich in den Verfahrensschritten a) und c) für eine äquimolare Umsetzung von Komponente A) mit Komponente B) resultierende Gesamtreaktionsenthalpie im Bereich von -900 kJ/kg bis -500 kJ/kg, bestimmt gemäß DIN 51007:1994-06, vorzugsweise im Bereich von -900 kJ/kg bis -550 kJ/kg, besonders bevorzugt im Bereich von -900 kJ/kg bis -580 kJ/kg, bevorzugter im Bereich von -900 kJ/kg bis -600 kJ/kg, noch bevorzugter im Bereich von -900 kJ/kg bis -650 kJ/kg. Unter "Gesamtreaktionsenthalpie" wird im Rahmen der vorliegenden Erfindung die massenspezifische Änderung der Enthalpie verstanden, die ausschließlich in den Verfahrensschritten a) und c) für eine äquimolare Umsetzung von Komponente A) mit Komponente B), insbesondere ohne Verdünnung, erfolgt. Die Reaktionsenthalpie wird dabei in kJ je kg der Gesamtreaktionsmischung von Komponente A und Komponente B, bei einem molaren Verhältnis von Komponente A zu Komponente B von 1,0 : 1,0 angegeben. Eine Reaktion mit einer negativen Reaktionsenthalpie wird als eine exotherme Reaktion beschrieben, das bedeutet, dass bei der Reaktion Energie in Form von Wärme freigesetzt wird.

In einer bevorzugten Ausführungsform des erfindungsgemäßen Verfahrens wird in Schritt a) 25 % bis 98 %, vorzugsweise 30 % bis 95 %, besonders bevorzugt 40 % bis 90 %, ganz besonders bevorzugt 50 % bis 80 % der Gesamtreaktionsenthalpie abgeführt. Dies hat den Vorteil, dass die maximale freiwerdende Wärme des entstehenden TPUs beim Produktionsprozess kontrolliert werden kann und dadurch engere Temperaturgrenzen eingehalten werden können.

In einer bevorzugten Ausführungsform des erfindungsgemäßen Verfahrens insgesamt, d.h. über alle Verfahrensstufen, ein molares Verhältnis von Komponente A) zu Komponente B) von 1,0 : 0,95 bis 0,95 : 1,0 vorliegt.

Eine weitere Ausführungsform die Erfindung betrifft ein thermoplastisches Polyurethan erhältlich oder erhalten durch das erfindungsgemäße Verfahren. Das erfindungsgemäße thermoplastische Polyurethan

In einer bevorzugten Ausführungsform liegt der L*-Wert des erfindungsgemäßen thermoplastischen Polyurethans, gemessen im CIELab Farbraum mit der Lichtart D 65, zwischen 80 und 100 und der b*-Wert zwischen -0,5 und 1,5, vorzugsweise liegt der L*-Wert zwischen 80 und 100 und der b*-Wert zwischen -0,5 und 1,0.

In einer weiteren Ausführungsform betrifft die Erfindung die Verwendung des erfindungsgemäßen thermoplastischen Polyurethans in einem Formgebungsverfahren unter Aufschmelzen des thermoplastischen Polyurethans, insbesondere zur Herstellung von Innenraumbauteilen von Fahrzeugen.

In einer weiteren Ausführungsform betrifft die Erfindung eine Zusammensetzung, die mindestens ein erfindungsgemäßes thermoplastisches Polyurethanpolymer und mindestens ein Additiv oder ein weiteres thermoplastisches Polymer umfasst.

Bei dem Additiv kann es sich beispielsweise um im Bereich der Thermoplasttechnologie gängige Additive wie Farbstoffe, Füllstoffe, Verarbeitungshilfsmittel, Weichmacher, Nucleierungsmittel, Stabilisatoren, Flammschutzmittel, Entformungsmittel oder verstärkende Additive handeln. Nähere Angaben über die genannten Additive sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen. Selbstverständlich kann es ebenfalls von Vorteil sein, mehrere Additive mehrerer Typen zu verwenden.

Geeignete thermoplastische Polymere, die Bestandteil der erfindungsgemäßen Zusammensetzung sein können, sind beispielsweise Polystyrole, Polyamide, Polyethylen, Polypropylen, Polyacrylate, Polymethacrylate, Polyurethane oder auch Acrylnitril-Butadien-Styrol-Copolymere (ABS).

Aus den erfindungsgemäßen Zusammensetzungen können thermoplastische Formmassen hergestellt werden. Ein weiterer Gegenstand der Erfindung ist daher eine thermoplastische Formmasse, welche mindestens eine erfindungsgemäße Zusammensetzung umfasst. Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 180 °C bis 320 °C, besonders bevorzugt bei 200 °C bis 300 °C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert oder schmelzextrudiert werden.

Die Vermischung der einzelnen Bestandteile der Zusammensetzungen kann in bekannter Weise sowohl sukzessive als auch simultan erfolgen, und zwar sowohl bei etwa 20 °C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Gegenstand der Erfindung ist auch ein Verfahren zur Herstellung der erfindungsgemäßen Formmassen.

Die erfindungsgemäßen thermoplastischen Formmassen können zur Herstellung von Formkörpern, Folien und / oder Fasern jeder Art verwendet werden. Ein weiterer Gegenstand der Erfindung ist daher ein Formkörper, eine Folie und / oder eine Faser, wobei der Formkörper, die Folie oder die Faser mindestens ein erfindungsgemäßes thermoplastisches Polyurethanpolymer, mindestens eine erfindungsgemäße thermoplastische Formmasse oder mindestens eine erfindungsgemäße Zusammensetzung umfasst. Diese können beispielsweise durch Spritzguss, Extrusion, Blasformverfahren und / oder Schmelzspinnen hergestellt werden. Eine weitere Form der Verarbeitung ist die Herstellung von Formkörpern durch Tiefziehen aus zuvor hergestellten Platten oder Folien.

Es ist auch möglich, die Bestandteile der Zusammensetzungen direkt in eine Spritzgussmaschine oder in ein Extrusionsaggregat zu dosieren und zu Formkörper zu verarbeiten.

Ein weiterer Gegenstand der Erfindung ist die Verwendung eines erfindungsgemäßen thermoplastischen Polyurethanpolymers zur Herstellung einer Zusammensetzung oder einer thermoplastischen Formmasse.

Ein weiterer Gegenstand der Erfindung ist die Verwendung einer erfindungsgemäßen Zusammensetzung zur Herstellung einer thermoplastischen Formmasse.

Ein weiterer Gegenstand der Erfindung ist die Verwendung eines erfindungsgemäßen thermoplastischen Polyurethanpolymers, einer erfindungsgemäßen thermoplastischen Formmasse oder einer erfindungsgemäßen Zusammensetzung zur Herstellung eines Formkörpers, einer Folie und / oder einer Faser.

Zur näheren Erläuterung der Erfindung dient die nachfolgend erläuterte Abbildung, wobei diese lediglich Anschauungsbeispiele für bestimmte Ausführungsformen darstellen, nicht jedoch eine Beschränkung des Umfangs der Erfindung:

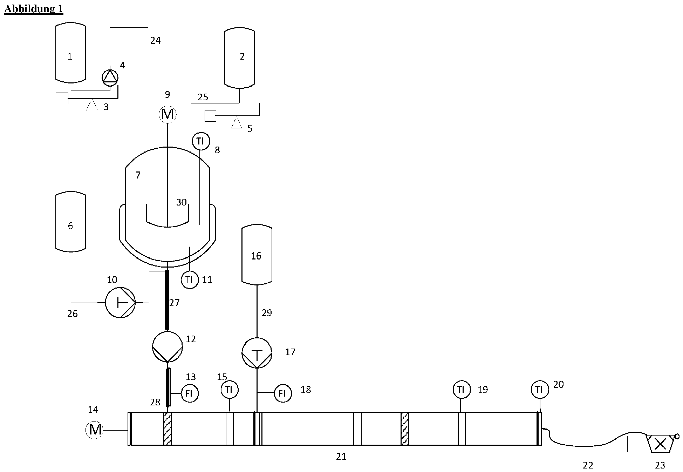

Abbildung 1: eine bevorzugte Vorrichtung zur Durchführung des erfindungsgemäßen Verfahrens.

### Beispiele

Die vorliegende Erfindung wird anhand der nachfolgenden Beispiele weiter erläutert, ohne jedoch darauf beschränkt zu sein.

Alle Prozentangaben beziehen sich, soweit nichts Anderslautendes vermerkt, auf das Gewicht.

### Verwendete Rohstoffe:

1,6-Diisocyanatohexan (HDI) wurde von der Covestro AG bezogen.
1,4-Butandiol (BDO) wurde von der Firma Ashland bezogen.
Beide Rohstoffe hatten eine Reinheit von ≥ 99 %.

### Farbwerte

Die Farbwerte im CIE-Lab Farbraum wurden mit einem Konica Minolta CM5 Spektralphotometer, mit der Lichtart D 65, bei 10° Beobachter gemäß DIN EN ISO 11664-1 (Juli 2011) bestimmt.

### Differential Scanning Calorimetrie (DSC)

Der Schmelzpunkt wurde mittels DSC (Differential Scanning Calorimetrie) mit einem Mettler DSC 12E (Mettler Toledo GmbH, Gießen, DE) entsprechend DIN EN 61006 (November 2004) bestimmt. Eine Kalibrierung erfolgte durch die Temperatur des Schmelz-Onsets von Indium und Blei. Es wurden 10 mg Substanz in Normalkapseln eingewogen. Die Messung erfolgte durch drei Aufheizungen von -50 °C bis +200 °C bei einer Heizrate von 20 K/min mit anschließender Abkühlung mit einer Kühlrate von 20 K/min. Die Kühlung erfolgte durch flüssigen Stickstoff. Als Spülgas wurde Stickstoff verwendet. Die angegebenen Werte basieren jeweils auf der Auswertung der 2. Aufheizkurve.

### Screening Differenz-Thermoanalyse (DTA)

Die Enthalpiedaten wurden mittels einer Screening-DTA ermittelt in einem nach ISO 17025 akkreditierten Labor durchgeführt. Die Proben wurden in Glasampullen eingewogen, gasdicht versiegelt und im Messgerät mit 3 K/min von -50 °C bis +450 °C erwärmt. Mittels Thermoelementen wurde die Differenz zwischen der Probentemperatur und der Temperatur einer inerten Referenz (Aluminiumoxid) bestimmt. Die Einwaage lag bei 20 mg - 30 mg. Alle Messungen wurden nach DIN 51007 (Juni 1994) durchgeführt. Der Messfehler des Geräts liegt bei ± 2 %.

**Tabelle 1: Experimentell, mittels DTA bestimmte Reaktionsenthalpien. Das molaren Verhältnis von Diisocyanat-Komponente zu Diol-Komponente beträgt bei den Bestimmungen 1,0 : 1,0.**

| **Diisocyanat** | **Diol** | **Energie [kJ/kg]** |
|---|---|---|
| **Erfindungsgemäße Beispiele** | | |
| 1,6-Diisocyanatohexan | 1,4-Butandiol | -690 |
| 1,6-Diisocyanatohexan | 1,6-Hexandiol | -550 |

| **Nicht erfindungsgemäßes Beispiel** | | |
|---|---|---|
| 4,4'-Diphenylmethandiisocyanat | 1,4-Butandiol | -465 |

### Vergleichsbeispiel 1:

In einem mit Stickstoff inertisierten 51 Druckkessel mit Ankerrührer, Bodenablass und Innenthermometer wurden 1,4-Butandiol (1,35 kg) unter Stickstoff (1 bar) vorgelegt und gerührt, bis eine Innentemperatur von 90 °C erreicht wurde. Über einen Zeitraum von 2 h wurde anschließend die Gesamtmenge an 1,6-Diisocyanatohexan kontinuierlich in den Druckkessel dosiert (2,5 kg), während gleichzeitig die Reaktortemperatur kontinuierlich bis auf 190 °C erhöht wurde. Die Temperatur des Reaktionsgemischs lag aufgrund der freiwerdenden Reaktionswärme der Polyaddition über die gesamte Reaktionszeit bis zu 15 °C oberhalb der jeweiligen vorgegebenen Reaktortemperatur. Nach Beendigung der Zugabe von 1,6-Diisocyanatohexan wurde noch weitere 10 Minuten bei 200 °C gerührt. Während dieser Zeit wurde ein Anstieg der Viskosität auf 106 Pa*s (Frequenz von 1 Hz, Rheometer: Anton Paar MCR-302; Messung nach ISO 6721-10 (September 2015)) detektiert. Dieser Anstieg der Viskosität führte zu einem Ausfall des Rührers. Aufgrund der hohen Viskosität war ein Austrag des Polymers aus dem Druckkessel nicht möglich.

Der Schmelzpunkt des Polymers beträgt 174,9 °C (DSC 2.Aufheizung nach Abkühlung mit 20 K/min). Der L*-Wert beträgt 84,4, der b*-Wert beträgt 2.

### Erfindungsgemäßes Beispiel (Abbildung 1):

Abbildung 1 zeigt schematisch den Aufbau zur Durchführung der zweistufigen kontinuierlichen Herstellung eines thermoplastischen Polyurethans.

Aus dem Diol-Vorratsbehälter 1, der auf der ersten Waage 3 stand, wurden 13,955 kg 1,4-Butandiol mit der Pumpe 4 durch die Diolleitung 24 in den gerührten Reaktor 7 gefördert. Reaktor 7 war doppelwandig ausgeführt und konnte durch Thermostaten mit Wärmeträgeröl temperiert werden. Die Temperatur in Reaktor 7 wurde auf 80 °C eingestellt und über den Temperaturfühler 11 kontrolliert. Anschließend wurden unter kontinuierlichem Rühren innerhalb von 3 Stunden aus dem Diisocyanat-Vorratsbehälter 2, der sich auf der Waage 5 befand, 22,920 kg 1,6-Diisocyanatohexan durch die Diisocyanatleitung 25 in den Reaktor 7 gefördert. Zur Förderung wurde der hydrostatische Druckunterschied zwischen dem Diisocyanat-Vorratsbehälter 2 und dem Reaktor 7 ausgenutzt. Bis zum Ende der Dosierung des Hexamethylendiisocyanats stieg die durch den Temperaturfühler 8 bzw. 11 gemessene Temperatur auf 190 °C an. Der Temperaturanstieg wurde durch manuelle Einstellung der Dosierrate des Hexamethylendiisocyanats auf maximal 20 K innerhalb 30 Minuten begrenzt. Die Beheizung des Reaktors 7 wurde während der Dosierung entsprechend der von den Temperaturfühlern 8 und 11 gemessenen Temperaturen nachgeregelt und betrug am Ende des Dosiervorgangs 195 °C. In diesem Schritt wurden 54 % der insgesamt entstehenden Reaktionswärme abgeführt.

Anschließend wurde das erhaltene OH-funktionelle Prepolymer mit Hilfe der Pumpe 12 durch die Prepolymerzuführungsleitung 27 in den Planetwalzenextruder 21 gefördert. Die zweite Pumpe 12 sowie die Prepolymerzuführungsleitung 27, die Reaktor 7 und Planetwalzenextruder 21 verband, waren beheizbar und wurden auf einer Temperatur von 200 °C gehalten. Der Planetwalzenextruder 21 war ein PWE 50 ENTEX Rust & Mitschke GmbH. Die Durchflussmenge des OH-funktionellen Prepolymers wurde mit Hilfe des Massedurchflussmessers 13 auf 5 kg/h eingestellt. Das OH-funktionelle Prepolymer wurde am Einzug 28 in den Planetwalzenextruder 21 eindosiert. Weiterhin wurden aus dem Diisocyanat-Vorratsbehälter 16 424 g/h Hexamethylendiisocyanat mit Hilfe von Pumpe 17 und kontrolliert durch den Massedurchflussmesser 18 durch die Diisocyanatleitung 29 in den Planetwalzenextruder 21 gefördert. Die Temperatur im Planetwalzenextruder 21 wurde durch die Temperaturfühler 15, 19 und 20 gemessen und mit Hilfe eines Ölthermostaten auf eine Temperatur von 210 °C eingestellt. Die Drehzahl des Planetwalzenextruders 21 betrug 150 U/min.

Das entstandene milchig-weiße Produkt wurde durch die Extruderdüsen ausgetragen, als Strang abgezogen, in einem Wasserbad 22 (25 °C) gekühlt und im Granulator 23 granuliert.

Die mittlere Verweilzeit im Planetwalzenextruder betrug ca. 5 Minuten.

Der Schmelzpunkt des hergestellten Polymers beträgt 179,7 °C (DSC 2. Aufheizung nach Abkühlung mit 20 K/min). Der L*-Wert beträgt 81,7, der b*-Wert beträgt 0,4.

### Bezugszeichenliste

- (1): Diol-Vorratsbehälter
- (2): erster Diisocyanat-Vorratsbehälter
- (3): erste Waage
- (4): erste Pumpe
- (5): zweite Waage
- (6): Lösemittelvorratsbehälter
- (7): Reaktor
- (8): erster Temperaturfühler
- (9): Antrieb für Rührer (30)
- (10): zweite Pumpe
- (11): zweiter Temperaturfühler
- (12): zweite Pumpe
- (13): erster Massedurchflussmesser
- (14): Antrieb für Planetwalzenextruder (21)
- (15): dritter Temperaturfühler
- (16): zweiter Diisocyanat-Vorratsbehälter
- (17): dritte Pumpe
- (18): zweiter Massedurchflussmesser
- (19): vierter Temperaturfühler
- (20): fünfter Temperaturfühler
- (21): Planetwalzenextruder
- (22): Wasserbad
- (23): Granulator
- (24): Diolleitung
- (25): erste Diisocyanatleitung
- (26): Lösemittelzuführungsleitung
- (27): Prepolymerzuführungsleitung
- (28): Extrudereinzug
- (29): zweite Diisocyanatleitung
- (30): Rührer

## Patentansprüche

1. Verfahren zur Herstellung eines thermoplastischen Polyurethans mittels Reaktivextrusion durch Umsetzung der Komponenten
A) einem oder mehreren aliphatischen Diolen, wobei die Gesamtmenge der Komponente A) ein durchschnittliches Molekulargewicht im Bereich von 62 g/mol bis 120 g/mol aufweist,
B) 1,4-Diisocyanatobutan (BDI), 1,5-Diisocyanatopentan (PDI), 1,6-Diisocyanatohexan (HDI) und / oder Mischungen aus mindestens 2 hieraus,
C) gegebenenfalls einem oder mehreren Katalysatoren, und
D) gegebenenfalls weiterer Hilfs- oder Zusatzstoffe,
**dadurch gekennzeichnet, dass** es die folgenden Schritte umfasst:
a) Diskontinuierliche Herstellung von OH-funktionellen Prepolymeren aus einer Teilmenge der Komponente A) oder der Gesamtmenge der Komponente A), bevorzugt der Gesamtmenge der Komponente A) mit einer Teilmenge der Komponente B), wobei ein molares Verhältnis von Komponente A) zu Komponente B) von 1,0 : 0,75 bis 1,0 : 0,95 vorliegt,
b) gegebenenfalls Isolieren der OH-funktionellen Prepolymere aus Schritt a),
c) Umsetzen der OH-funktionellen Prepolymere mit einer weiteren Teilmenge der Komponente B) und gegebenenfalls einer weiteren Teilmenge der Komponente A), bevorzugt nur mit einer weiteren Teilmenge der Komponente B), in einem Extruder unter Erhalt des thermoplastischen Polyurethans als Extrudat,
wobei die Schritte a) und / oder c) gegebenenfalls in Gegenwart der Gesamtmenge oder einer Teilmenge der Komponente C) und / oder der Gesamtmenge oder einer Teilmenge der Komponente D) durchgeführt werden,
wobei die Summe aller Teilmengen der Komponente B) bzw. die Summe aller Teilmengen der Komponente C), bzw. die Summe aller Teilmengen der Komponente D) über alle Verfahrensschritte der Gesamtmenge der Komponente B), bzw. der Gesamtmenge der Komponente C), bzw. der Gesamtmenge der Komponente D) entspricht.

2. Verfahren nach Anspruch 1, **dadurch gekennzeichnet, dass** die Umsetzung im Extruder in Schritt c) kontinuierlich oder diskontinuierlich erfolgt, wobei vorzugsweise die Umsetzung im Extruder in Schritt c) kontinuierlich erfolgt.

3. Verfahren nach Anspruch 1 oder 2, **dadurch gekennzeichnet, dass** die Einleitung der weiteren Teilmenge der Komponente B) und gegebenenfalls der weiteren Teilmenge der Komponente A) in den Extruder in Schritt c) in Extruderarbeitsrichtung stromabwärts der Einleitung der OH-funktionellen Prepolymere erfolgt.

4. Verfahren nach einem der Ansprüche 1 bis 3, **dadurch gekennzeichnet, dass** vor dem Einleiten der OH-funktionellen Prepolymere in den Extruder in Schritt c) aus den OH-funktionellen Prepolymeren Gase und gasförmige Nebenprodukte entfernt werden, bevorzugt indem die OH-funktionellen Prepolymere durch eine Entlüftungseinrichtung geführt werden, bevorzugt bei einem Unterdruck von 50 mbar bis 500 mbar unter Normaldruck, wobei die Entlüftungseinrichtung vorzugsweise an dem Extruder angeordnet ist.

5. Verfahren nach einem der Ansprüche 1 bis 4, **dadurch gekennzeichnet, dass** die Umsetzung in Schritt c) bei einer Temperatur von 150 °C bis 260 °C, bevorzugt von 180 °C bis 240 °C durchgeführt wird.

6. Verfahren nach einem der Ansprüche 1 bis 5, **dadurch gekennzeichnet, dass** aus dem thermoplastischen Polyurethan Gase und gasförmige Nebenprodukte entfernt werden, indem ein Unterdruck von 50 mbar bis 500 mbar unter Normaldruck an einem Entgasungsschacht angelegt wird, der bevorzugt im in Extruderarbeitsrichtung letzten Drittel des Extruders angeordnet ist.

7. Verfahren nach einem der Ansprüche 1 bis 6, **dadurch gekennzeichnet, dass** das Verfahren die folgenden, zusätzlichen Schritte umfasst:
d) Abkühlen des dem thermoplastischen Polyurethans unter seinen Schmelzpunkt in einer Kühlungseinrichtung,
e) Zerkleinerung des thermoplastischen Polyurethans in einer Zerkleinerungseinrichtung.

8. Verfahren nach einem der Ansprüche 1 bis 7, **dadurch gekennzeichnet, dass** die Komponente A) ausgewählt ist aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und / oder Mischungen aus mindestens 2 hieraus, vorzugsweise ausgewählt ist aus der Gruppe bestehend aus 1,2-Ethandiol, 1,2-Propandiol, 1,3-Propandiol, 1,2-Butandiol, 1,3-Butandiol, 1,4-Butandiol und / oder Mischungen aus mindestens 2 hieraus, besonders bevorzugt ausgewählt ist aus der Gruppe bestehend aus 1,2-Ethandiol, 1,3-Propandiol, 1,4-Butandiol, und / oder Mischungen aus mindestens 2 hieraus und noch bevorzugter 1,4-Butandiol ist.

9. Verfahren nach einem der Ansprüche 1 bis 8, **dadurch gekennzeichnet, dass** als Komponente A) 1,4-Butandiol und als Komponente B) 1,5-Diisocyanatopentan (PDI), 1,6-Diisocyanatohexan (HDI) und / oder Mischungen hieraus eingesetzt werden, vorzugsweise als Komponente A) 1,4-Butandiol und als Komponente B) 1,6-Diisocyanatohexan (HDI) eingesetzt werden.

10. Verfahren nach einem der Ansprüche 1 bis 9, **dadurch gekennzeichnet, dass** die ausschließlich in den Verfahrensschritten a) und c) für eine äquimolare Umsetzung von Komponente A) mit Komponente B) resultierende Gesamtreaktionsenthalpie im Bereich von -900 kJ/kg bis -500 kJ/kg ist, bestimmt gemäß DIN 51007:1994-06, vorzugsweise im Bereich von -900 kJ/kg bis - 550 kJ/kg, besonders bevorzugt im Bereich von -900 kJ/kg bis -580 kJ/kg, bevorzugter im Bereich von -900 kJ/kg bis -600 kJ/kg, noch bevorzugter im Bereich von -900 kJ/kg bis -650 kJ/kg ist.

11. Verfahren nach einem der Ansprüche 1 bis 10, **dadurch gekennzeichnet, dass** in Schritt a) 25 % bis 98 % der Gesamtreaktionsenthalpie abgeführt wird, vorzugsweise 30 % bis 95 %, besonders bevorzugt 40 % bis 90 %, ganz besonders bevorzugt 50 % bis 80 %.

12. Verfahren nach einem der Ansprüche 1 bis 10 **dadurch gekennzeichnet, dass** insgesamt ein molares Verhältnis von Komponente A) zu Komponente B) von 1,0 : 0,95 bis 0,95 : 1,0 vorliegt.

13. Thermoplastisches Polyurethan erhältlich oder erhalten durch ein Verfahren nach einem der Ansprüche 1 bis 12.

14. Thermoplastisches Polyurethan nach Anspruch 13, **dadurch gekennzeichnet, dass** der L*-Wert, gemessen im CIELab Farbraum mit der Lichtart D 65, zwischen 80 und 100 liegt und der b*-Wert zwischen -0,5 und 1,5 liegt, vorzugsweise liegt der L*-Wert zwischen 80 und 100 und der b*-Wert zwischen -0,5 und 1,0.

15. Verwendung eines thermoplastischen Polyurethans nach den Ansprüchen 14 oder 15 in einem Formgebungsverfahren unter Aufschmelzen des thermoplastischen Polyurethans, insbesondere zur Herstellung von Bauteilen von Fahrzeugen.

16. Zusammensetzung, **dadurch gekennzeichnet, dass** sie mindestens ein thermoplastisches Polyurethanpolymer nach einem der Ansprüche 13 oder 14 und mindestens ein Additiv und / oder ein weiteres thermoplastisches Polymer umfasst.

17. Thermoplastische Formmasse, **dadurch gekennzeichnet, dass** sie mindestens eine Zusammensetzung nach Anspruch 16 umfasst.

18. Formkörper, Folie und / oder Faser **dadurch gekennzeichnet, dass** der Formkörper, die Folie oder die Faser mindestens ein thermoplastisches Polyurethanpolymer nach einem der Ansprüche 13 oder 14, mindestens eine thermoplastische Formmasse nach Anspruch 17 oder mindestens eine Zusammensetzung nach Anspruch 16 umfasst.

19. Verwendung eines thermoplastischen Polyurethanpolymers nach einem der Ansprüche 13 oder 14, einer thermoplastischen Formmasse nach Anspruch 17 oder einer Zusammensetzung nach Anspruch 16 zur Herstellung eines Formkörpers, einer Folie und / oder einer Faser.

20. Verwendung eines thermoplastischen Polyurethanpolymers nach einem der Ansprüche 13 oder 14 zur Herstellung einer Zusammensetzung oder einer thermoplastischen Formmasse.
